# EUROPEAN PATENT APPLICATION

(11) **EP 2 821 924 A1**
(43) Date of publication of application: **07.01.2015**
(21) Application number: 12872350.9
(22) Date of filing: 26.10.2012
(51) Int. Cl.: G06F 17/30

(54) **METHOD, DEVICE AND SYSTEM FOR QUERYING DATA INDEX**

(30) Priority: 30.03.2012 CN 201210090425
(71) Applicant: Huawei Technologies Co., Ltd., Shenzhen, Guangdong 518129 (CN)
(72) Inventor: ZHOU, Minqi, Shenzhen Guangdong 518129 (CN); CHENG, Shi, Shenzhen Guangdong 518129 (CN)
(74) Representative: Epping - Hermann - Fischer
(86) International application number: PCT/CN2012/083593
(87) International publication number: WO 2013/143278

(57) **Abstract**

Embodiments of the present invention disclose a data index query method, apparatus and system. The method includes: after performing Gray encoding on an index attribute, shuffling and encoding, by a server side, a Gray code corresponding to the index attribute to generate at least one index key value and storing the index key value; generating, by the server side according to query condition information carried in a query request, an index key value set or interval corresponding to the query condition information; obtaining an indicator set or interval used for indicating data and corresponding to the index key value set or interval according to the index key value set or interval; generating an intermediate data set corresponding to the indicator set or interval; and finally obtaining, from the intermediate data set, a target data set corresponding to the query condition information according to the query condition information carried in the query request.

## Description

This application claims priority to Chinese Patent Application No. 201210090425.7, filed with the Chinese Patent Office on March 30, 2012 and entitled "DATA INDEX QUERY METHOD, APPARATUS AND SYSTEM", which is incorporated herein by reference in its entirety.

### FIELD OF THE INVENTION

The present invention relates to the field of information management systems, and in particular, to a data index query method, apparatus and system.

### BACKGROUND OF THE INVENTION

The index is an important part of a database technology, and is used for accelerating access to data satisfying a specific condition in a large-capacity storage system. Especially for a transaction database service oriented to massive data, the index technology must be used to reduce the delay of data retrieval and the hardware overhead.

Substantially, the index is also a storage system, which includes a key value, and location information (indicator) pointing to an original storage system. In one aspect, the key value of the index is organized by means of sequencing or in the format of a hash linked list, ensuring a high speed for querying a key value of the index. In another aspect, the indicator of the index is featured by the small amount of information, so that the data amount of the index is far less than that of the original storage system, thereby relatively decreasing the overhead for traversing the index.

Multi-attribute query refers to a query operation including multiple attribute filter criteria. To improve the performance of a database that has a large amount of data and requires multi-attribute query, the indexes must be created for multiple attributes. Currently, during the multi-attribute index query, the multi-attribute data index query is generally implemented through a separate index of each dimension, or an R-tree or SS-tree data spatial index. However, implementing the multi-attribute data index query in the two manners leads to the large storage overhead of a server that provides an index service.

### SUMMARY OF THE INVENTION

Embodiments of the present invention provide a data index query method, apparatus and system, which reduce the storage overhead of a device that provides an index query service. The embodiments of the present invention adopt the following technical solutions.

A method for establishing a data index includes:
after performing Gray encoding on an index attribute, shuffling and encoding a Gray code corresponding to the index attribute according to a preset rule; and
generating at least one index key value from the shuffled and encoded Gray code and storing the index key value in a memory.

An apparatus for establishing a data index includes:
a processing unit, configured to, after Gray encoding is performed on an index attribute, shuffle and encode a Gray code corresponding to the index attribute according to a preset rule; and
an index key value generating unit, configured to generate at least one index key value from the Gray code shuffled and encoded by the processing unit, and store index key value in a memory.

In the method and apparatus for establishing a data index provided in the embodiments of the present invention, an index key value is generated by shuffling and encoding a Gray code corresponding to the index attribute, thereby reducing the storage overhead of a device that provides an index service.

A data query method includes:
receiving a query request from a user end, and according to query condition information carried in the query request, generating an index key value set corresponding to the query condition information, where an index key value in the index key value set is generated by shuffling and encoding a Gray code corresponding to an index attribute according to a preset rule;
according to the index key value set, obtaining an indicator set that is used for indicating data and is corresponding to the index key value set;
generating an intermediate data set corresponding to the indicator set;
obtaining, from the intermediate data set, a target data set corresponding to the query condition information according to the query condition information carried in the query request of the user end; and
sending the target data set to the user end.

Another data query method includes:
receiving a query request from a user end, where the query request includes query condition information and the query condition information includes an index attribute and an index attribute value that the index attribute needs to satisfy;
generating an index key value set corresponding to the query condition information according to the index attribute and the index attribute value, where the index key value set includes one or more index key values, and the index key value is generated by shuffling and encoding a Gray code corresponding to the index attribute value according to a preset rule;
according to the index key value set, obtaining an indicator set that is used for indicating data and is corresponding to the index key value set;
generating an intermediate data set corresponding to the indicator set;
obtaining, from the intermediate data set, a target data set corresponding to the query condition information according to the query condition information carried in the query request of the user end; and
sending the target data set to the user end.

A sequence of index key values generated through shuffling and encoding is the same as that of Gray codes corresponding to the index attribute values input during encoding, and the intermediate data set includes data that is corresponding to indicators in the indicator set and satisfies the query condition information, and data that is corresponding to indicators in the indicator set but does not satisfy the query condition information.

The obtaining, from the intermediate data set, the target data set corresponding to the query condition information according to the query condition information carried in the query request of the user end includes:
deleting the data not satisfying the query condition information from the intermediate data set according to the query condition information carried in the query request of the user end, and then obtaining the target data set, where the target data set is formed by data conforming to the query condition information.

A data query apparatus includes:
a query request receiving unit, configured to receive a query request from a user end, and according to query condition information carried in the query request, generate an index key value set corresponding to the query condition information, where an index key value in the index key value set is generated by shuffling and encoding a Gray code corresponding to the index attribute according to a preset rule;
a first obtaining unit, configured to obtain an indicator set that is used for indicating data and is corresponding to the index key value set according to the index key value set;
a generating unit, configured to generate an intermediate data set corresponding to the indicator set obtained by the first obtaining unit;
a second obtaining unit, configured to obtain, from the intermediate data set generated by the generating unit, a target data set corresponding to the query condition information according to the query condition information carried in the query request of the user end; and
a sending unit, configured to send the target data set obtained by the second obtaining unit to the user end.

Another data query apparatus includes:
a query request receiving unit, configured to receive a query request from a user end, where the query request includes query condition information and the query condition information includes an index attribute and an index attribute value that the index attribute needs to satisfy;
a generating unit, configured to generate an index key value set corresponding to the query condition information according to the index attribute and the index attribute value, where the index key value set includes one or more index key values, and the index key value is generated by shuffling and encoding a Gray code corresponding to the index attribute value according to a preset rule;
a first obtaining unit, configured to obtain an indicator set that is used for indicating data and is corresponding to the index key value set according to the index key value set generated by the generating unit;
the generating unit is further configured to generate an intermediate data set corresponding to the indicator set obtained by the first obtaining unit;
a second obtaining unit, configured to obtain, from the intermediate data set generated by the generating unit, a target data set corresponding to the query condition information according to the query condition information carried in the query request of the user end; and
a sending unit, configured to send the target data set obtained by the second obtaining unit to the user end.

A sequence of index key values generated through shuffling and encoding is the same as that of Gray codes corresponding to the index attribute values input during encoding, and the intermediate data set includes data that is corresponding to indicators in the indicator set and satisfies the query condition information, and data that is corresponding to indicators in the indicator set but does not satisfy the query condition information.

The second obtaining unit is specifically configured to delete the data not satisfying the query condition information from the intermediate data set according to the query condition information carried in the query request of the user end, and then obtain the target data set, where the target data set is formed by data conforming to the query condition information.

In the data query method and apparatus provided in the embodiments of the present invention, according to the query request of the user end, the index key value generated by shuffling and encoding the Gray code is used to query data satisfying the query request, thereby reducing the storage overhead of a device that provides an index service.

A storage system includes an apparatus for establishing a data index and a data query apparatus, where
the apparatus for establishing a data index is configured to, after Gray encoding is performed on an index attribute, shuffle and encode a Gray code corresponding to the index attribute according to a preset rule, generate at least one index key value from the shuffled and encoded Gray code, and store the index key value; and
the data query apparatus is configured to receive a query request from a user end, and according to query condition information carried in the query request, generate an index key value set corresponding to the query condition information, where the index key value is from the apparatus for establishing a data index; obtain an indicator set that is used for indicating data and is corresponding to the index key value set according to the index key value set; generate an intermediate data set corresponding to the indicator set; obtain, from the intermediate data set, a target data set corresponding to the query condition information according to the query condition information carried in the query request of the user end; and send the target data set to the user end.

In the data index query method, apparatus and system provided in the embodiments of the present invention, the Gray code corresponding to the index attribute are first shuffled and encoded to generate the index key value, and then data satisfying the query request of the user end is queried according to the generated index key value, thereby reducing the storage overhead of a device that provides an index service.

### BRIEF DESCRIPTION OF THE DRAWINGS

To describe the technical solution according to the embodiments of the present invention more clearly, the following briefly introduces the accompanying drawings for describing the embodiments or the prior art. Apparently, the accompanying drawings in the following description show merely some embodiments of the present invention, and a person of ordinary skill in the art may still derive other drawings from the accompanying drawings without creative efforts.
FIG. 1 is a flow chart of a method for establishing a data index according to an embodiment of the present invention;
FIG. 2 is a schematic structural diagram of an apparatus for establishing a data index according to an embodiment of the present invention;
FIG. 3 is a flow chart of a data query method according to an embodiment of the present invention;
FIG. 4 is a schematic structural diagram of a data query apparatus according to an embodiment of the present invention;
FIG. 5 is a structure diagram of a storage system according to an embodiment of the present invention; and
FIG. 6 is a distribution diagram of employee information query according to an embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

To make the advantages of the technical solutions of the present invention more comprehensible, the following describes the present invention in detail with reference to the accompanying drawings and the embodiments.

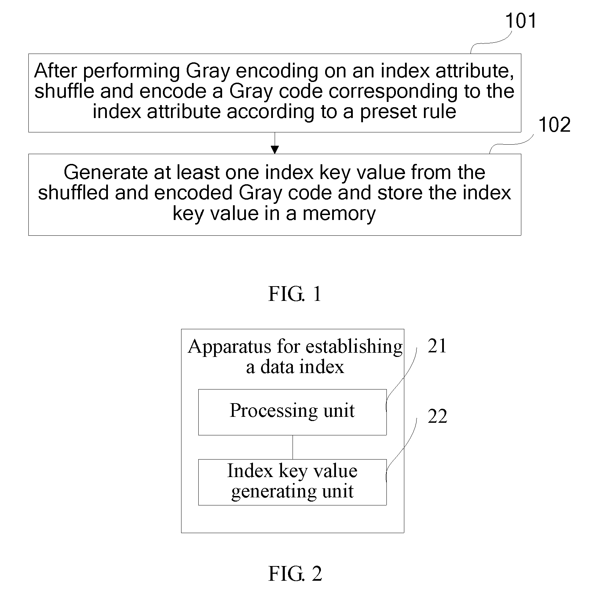

An embodiment of the present invention provides a method for establishing a data index. As shown in FIG. 1, the method includes the following steps:
101: After performing Gray encoding on an index attribute, shuffle and encode a Gray code corresponding to the index attribute according to a preset rule.

The Gray encoding is an encoding algorithm, which may map any data to data with a finite length, and meanwhile ensure the sequence of original data.

Specifically, for example, a feasible Gray encoding step includes: first constructing integer field mapping f1 to map any type of nonnumerical data to a real number, for example, reading a string type as a binary integer or performing a rounding operation on a floating-point number; then constructing finite integer field mapping f2 to map an integer field to a finite integer field, for example, using the formula *f*2(x)= [N arctan(*Mx*)], where the arctan function is a cotangent function, M is an originally recorded amplification parameter, N is a maximum value parameter of a finite range expected to be constructed, and the range of the f2 function is [0, N]. Generally, a considerably great number, such as 2³²-1, is selected as N, and then mapping f3 that maps the finite integer field to a binary code with a finite length is constructed. For example, when the value of N is 2³²-1 in the previous step and the length of mapped binary data is set to 10, the interval [0,2³²-1] is divided into 2¹⁰ = 1024 intervals, where the i^{th} interval of the finite integer field is [i*2²², (i+1)* 2²²-1], the value range of i is greater than or equal to zero and less than or equal to 1023; the mapping function is: f3(x) = binary(i), where x is the i^{th} interval of the finite integer field.

Finally, the Gray encoding function constructed in the example is: *grayEncode(x)* = *f*3*(f*2*(f*1*(x)))*

The mapping function in each step of the example maintains the sequence of the original data, so the finally generated Gray encoding function also maintains the sequence of the original data. Besides, the Gray encoding is irreversible, which is for the purpose of ensuring the finiteness of a code length, thereby controlling the maintenance and storage overhead of a device.

Furthermore, the shuffling and encoding is an encoding mode of shuffling multiple pieces of binary data with finite lengths according to each binary bit, and the following preset rule may be used to shuffle and encode a Gray code, for example, Gray codes of four existing index attribute values are 1100, 0101, 0010, 1110, respectively. Then, a shuffle rule may be preset, that is, first digits of the Gray codes (they are 1, 0, 0, 1, respectively) are taken to form front four digits of a shuffle code (namely, 1001), then subsequent bits are taken, and the rest may be deduced by analogy. In this way, the shuffle code generated in the example is 1001110100110100, and the shuffle code is stored in an index storage unit as an index key value.

102: Generate at least one index key value from the shuffled and encoded Gray code and store the index key value in a memory.

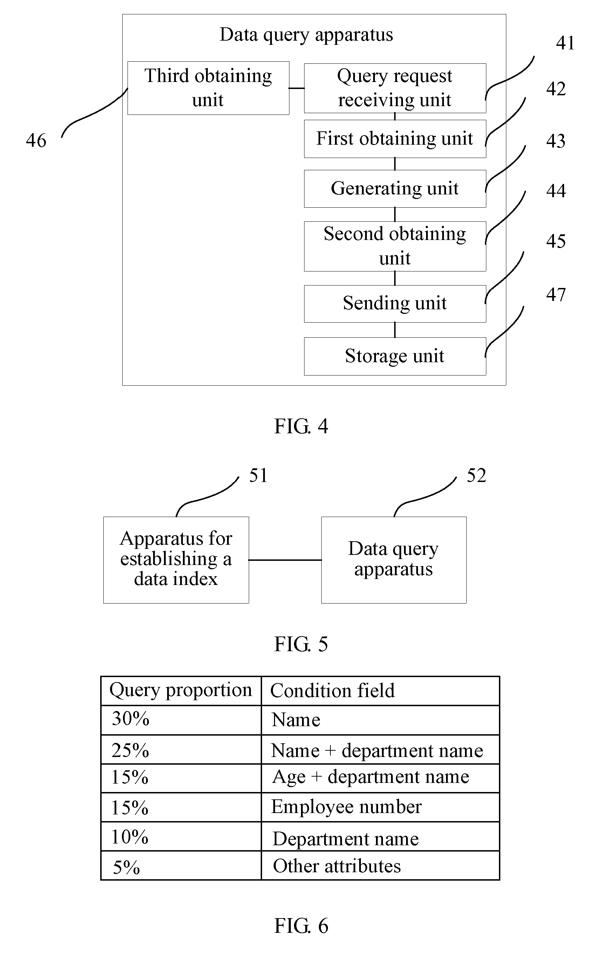

Each index key value is corresponding to at least one piece of data and the data is stored in the memory. Generally, before the index attributes are encoded, an index attribute which is more probable to be used as a query condition is selected as an index attribute for encoding at a server side, for example, as shown in FIG. 6, query requests each including one of a name, a department name, an age, an employee number as a query condition account for more than 95% of all query requests. So the four fields may be used as the index attributes, thereby achieving an optimal balance effect between the overhead of index maintenance and query efficiency.

The method according to the embodiment of the present invention may be executed by a universal integrated circuit or a dedicated integrated circuit or the like. The method according to the embodiment of the present invention may be applied to a device such as a server and a personal computer. The method for establishing a data index provided in the embodiment of the present invention may reduce the storage overhead of a storage device.

An embodiment provides an apparatus for establishing a data index. As shown in FIG. 2, an entity of the apparatus may be a device such as a server and a personal computer, and the apparatus includes a processing unit 21 and an index key value generating unit 22.

The processing unit 21 is configured to, after Gray encoding is performed on an index attribute, shuffle and encode a Gray code corresponding to the index attribute according to a preset rule.

The index key value generating unit 22 is configured to generate at least one index key value from the Gray code shuffled and encoded by the processing unit 21 and store the index key value.

Each index key value is corresponding to at least one piece of data and the data is stored in a memory.

The apparatus according to the embodiment of the present invention may be a universal integrated circuit or a dedicated integrated circuit or the like. The apparatus for establishing a data index provided according to the embodiment of the present invention may effectively reduce the storage overhead of a storage device.

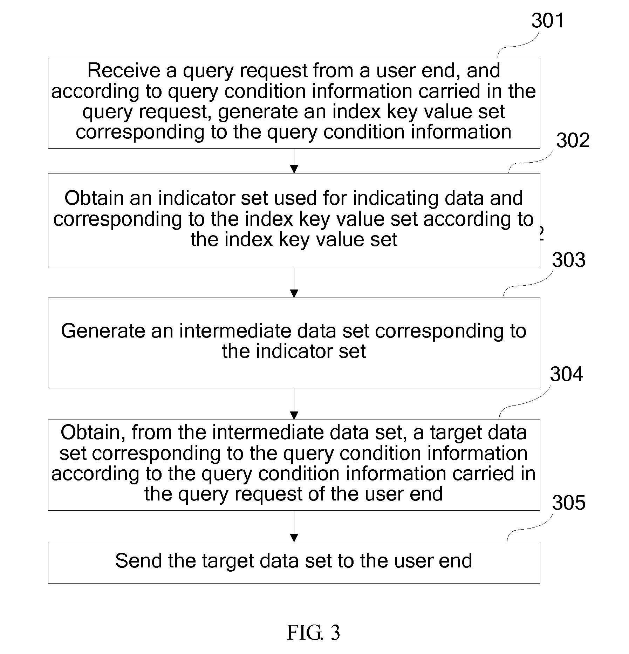

An embodiment of the present invention provides a data query method. As shown in FIG. 3, the method includes the following steps.

301: Receive a query request from a user end, and according to query condition information carried in the query request, generate an index key value set corresponding to the query condition information.

An index key value in the index key value set is generated by shuffling and encoding a Gray code corresponding to an index attribute according to a preset rule based on the method for establishing a data index shown in FIG. 1.

Alternatively, when the server determines that an overlapping range between index attributes carried in the query condition information and stored index attributes is less than a preset overlapping range, the server obtains a target data set according to the query condition information.

The preset overlapping range is determined according to an actual demand. Generally, when the query condition information is entirely or largely formed by non-index attributes, a server side performs query directly, but not performs query through an index.

In another embodiment, step 301 may be: receiving a query request from a user end, and according to an index attribute and an index attribute value, generating an index key value set corresponding to the query condition information.

The query request includes the query condition information, and the query condition information includes the index attribute and the index attribute value that the index attribute needs to satisfy; the index key value set includes one or more index key values, and the index key value is generated by shuffling and encoding the Gray code corresponding to the index attribute value according to a preset rule; a sequence of index key values generated through shuffling and encoding is the same as that of Gray codes corresponding to the index attribute values input during encoding; and an intermediate data set includes data that is corresponding to indicators in an indicator set and satisfies the query condition information, and data that is corresponding to indicators in the indicator set but does not satisfy the query condition information.

302: Obtain, according to the index key value set, an indicator set that is used for indicating data and is corresponding to the index key value set.

303: Generate an intermediate data set corresponding to the indicator set.

304: Obtain, from the intermediate data set, a target data set corresponding to the query condition information according to the query condition information carried in the query request of the user end.

Specifically, the index key value generated in step 301 may be corresponding to one or more pieces of data, so data not conforming to the query condition information may exist in the intermediate data set obtained according to the index key value. Data screening is performed again in the intermediate data set, so as to delete data not conforming to the requirement of the query condition information and obtain the target data set.

In another embodiment, step 304 may be: deleting the data not satisfying the query condition information from the intermediate data set according to the query condition information carried in the query request of the user end, and then obtaining the target data set, where the target data set is formed by data conforming to the query condition information.

305: Send the target data set to the user end.

Furthermore, when the user end needs to write data, an index key value and an indicator that are corresponding to the data required to be written are stored.

The method according to the embodiment of the present invention may be executed by a universal integrated circuit or a dedicated integrated circuit or the like. The method according to the embodiment of the present invention may be applied to a device such as a server and a personal computer. The data query method provided in the embodiment of the present invention ensures data query efficiency and meanwhile effectively reduces the storage overhead of a device.

An embodiment of the present invention provides a data query apparatus. As shown in FIG. 4, an entity of the apparatus may be a device such as a server and a personal computer, and the apparatus includes a query request receiving unit 41, a first obtaining unit 42, a generating unit 43, a second obtaining unit 44, a sending unit 45, a third obtaining unit 46, and a storage unit 47.

The query request receiving unit 41 is configured to receive a query request from a user end, and according to query condition information carried in the query request, generate an index key value set corresponding to the query condition information.

An index key value in the index key value set is generated by shuffling and encoding a Gray code corresponding to an index attribute according to a preset rule based on the method for establishing a data index shown in FIG. 1.

The first obtaining unit 42 is configured to obtain an indicator set that is used for indicating data and is corresponding to the index key value set, according to the index key value set generated by the query request receiving unit 41.

The generating unit 43 is configured to generate an intermediate data set corresponding to the indicator set obtained by the first obtaining unit 42.

In another embodiment, the generating unit 43 is configured to generate an index key value set corresponding to the query condition information according to the index attribute and an index attribute value.

The index key value set includes one or more index key values, and the index key value is generated by shuffling and encoding the Gray code corresponding to the index attribute value according to a preset rule. A sequence of index key values generated through shuffling and encoding is the same as that of Gray codes corresponding to the index attribute values input during encoding.

The second obtaining unit 44 is configured to obtain, from the intermediate data set generated by the generating unit 43, a target data set corresponding to the query condition information according to the query condition information carried in the query request of the user end.

In another embodiment, the second obtaining unit 44 is configured to delete data not satisfying the query condition information from the intermediate data set according to the query condition information carried in the query request of the user end, and obtain the target data set.

The intermediate data set includes data that is corresponding to indicators in the indicator set and satisfies the query condition information, and data that is corresponding to indicators in the indicator set but does not satisfy the query condition information, and the target data set is formed by data conforming to the query condition information.

The third obtaining unit 45 is configured to, when an overlapping range between index attribute carried in the query condition information and stored index attributes is less than a preset overlapping range, obtain the target data set according to the query condition information.

The sending unit 46 is configured to send the target data set obtained by the second obtaining unit 44 to the user end.

The storage unit 47 is configured to, when the user end needs to write data into the storage unit 47, store the data required to be written.

The storage unit 47 may be further configured to store an index key value and an indicator that are corresponding to the data required to be written.

The apparatus according to the embodiment of the present invention may be a universal integrated circuit or a dedicated integrated circuit or the like.

An embodiment of the present invention provides a storage system. As shown in FIG. 5, the storage system includes an apparatus for establishing a data index 51 and a data query apparatus 52.

Specifically, the apparatus for establishing a data index 51 is configured to, after Gray encoding is performed on an index attribute, shuffle and encode a Gray code corresponding to the index attribute according to a preset rule, generate at least one index key value from the shuffled and encoded Gray code, and store the index key value.

The data query apparatus 52 is configured to receive a query request from a user end, and according to query condition information carried in the query request, generate an index key value set corresponding to the query condition information, where the index key value is from the apparatus for establishing a data index 51; obtain an indicator set that is used for indicating data and is corresponding to the index key value set according to the index key value set; generate an intermediate data set corresponding to the indicator set; obtain, from the intermediate data set, a target data set corresponding to the query condition information according to the query condition information carried in the query request of the user end; and send the target data set to the user end.

In the data index query method, apparatus and system provided in the embodiments of the present invention, after Gray encoding is performed on an index attribute, Gray codes corresponding to all the index attributes are shuffled and encoded according to a preset rule to generate at least one index key value, and the index key value is stored in a server; a query request is then received from a user end, and according to query condition information carried in the query request, an index key value set corresponding to the query condition information is generated; further, an indicator set that is used for indicating data and is corresponding to the index key value set is obtained according to the index key value set, and an intermediate data set corresponding to the indicator set is generated; finally, a target data set corresponding to the query condition information is obtained from the intermediate data set according to the query condition information carried in the query request of the user end, and the target data set is sent to the user end. In the embodiments of the present invention, the index key value generated by shuffling and encoding the Gray code corresponding to the index attribute is used to perform data query, which reduces the storage overhead of a device that provides an index service.

The data index query apparatus provided in the embodiment of the present invention may implement the method embodiment provided above, and for the specific function implementation, reference may be made to the description in the method embodiment, and details are not repeated again herein. The data index query method, apparatus and system provided in the embodiments of the present invention are applicable to the field of information management systems, but the application is not limited thereto.

The method, apparatus and system according to the embodiments of the present invention may be applied to a database system, such as Oracle, DB2, MSSQL and mySQL.

A person of ordinary skill in the art should understand that all or a part of the processes of the method in each of the foregoing embodiments of may be implemented by a program instructing relevant hardware. The program may be stored in a computer readable storage medium. When the program is run, the processes of the method in each of the foregoing embodiments are performed. The storage medium may be a magnetic disk, an optical disk, a Read-Only Memory (Read-Only Memory, ROM), or a Random Access Memory (Read-Only Memory, RAM).

The foregoing description is merely about the specific implementation of the present invention, but is not intended to limit the protection scope of the present invention. Any variation or replacement readily figured out by a person skilled in the art within the technical scope of the present invention shall fall within the protection scope of the present invention. Therefore, the protection scope of the present invention shall be subject to the protection scope of the claims.

## Claims

1. A data query method, comprising:
receiving a query request from a user end, wherein the query request comprises query condition information, and the query condition information comprises an index attribute and an index attribute value that the index attribute needs to satisfy;
generating an index key value set corresponding to the query condition information according to the index attribute and the index attribute value, wherein the index key value set comprises one or more index key values, and the index key value is generated by shuffling and encoding a Gray code corresponding to the index attribute value according to a preset rule;
obtaining an indicator set that is used for indicating data and is corresponding to the index key value set according to the index key value set;
generating an intermediate data set corresponding to the indicator set;
obtaining, from the intermediate data set, a target data set corresponding to the query condition information according to the query condition information carried in the query request of the user end; and
sending the target data set to the user end.

2. The data query method according to claim 1, wherein a sequence of index key values generated through shuffling and encoding is the same as that of Gray codes corresponding to the index attribute values input during encoding.

3. The data query method according to claim 1, wherein:
the intermediate data set comprises data that is corresponding to indicators in the indicator set and satisfies the query condition information, and data that is corresponding to indicators in the indicator set but does not satisfy the query condition information.

4. The data query method according to claim 1, wherein the obtaining, from the intermediate data set, the target data set corresponding to the query condition information according to the query condition information carried in the query request of the user end comprises:
deleting data not satisfying the query condition information from the intermediate data set according to the query condition information carried in the query request of the user end, and obtaining the target data set, wherein the target data set is formed by data conforming to the query condition information.

5. The data query method according to claim 1, wherein before the generating the index key value set corresponding to the query condition information according to the query condition information carried in the query request of the user end, the method further comprises:
when an overlapping range between index attributes carried in the query condition information and stored index attributes is less than a preset overlapping range, obtaining the target data set according to the query condition information.

6. The data query method according to claim 1, further comprising:
when the user end needs to write data, storing the data required to be written; and
storing an index key value and an indicator that are corresponding to the data required to be written.

7. A method for establishing a data index, comprising:
after performing Gray encoding on an index attribute, shuffling and encoding a Gray code corresponding to the index attribute according to a preset rule; and
generating at least one index key value from the shuffled and encoded Gray code and storing the index key value in a memory.

8. The method for establishing a data index according to claim 7, wherein each index key value of the at least one index key value is corresponding to at least one piece of data and the data is stored in the memory.

9. A data query apparatus, comprising:
a query request receiving unit, configured to receive a query request from a user end, wherein the query request comprises query condition information, and the query condition information comprises an index attribute and an index attribute value that the index attribute needs to satisfy;
a generating unit, configured to generate an index key value set corresponding to the query condition information according to the index attribute and the index attribute value, wherein the index key value set comprises one or more index key values, and the index key value is generated by shuffling and encoding a Gray code corresponding to the index attribute value according to a preset rule;
a first obtaining unit, configured to obtain an indicator set that is used for indicating data and is corresponding to the index key value set according to the index key value set generated by the generating unit;
the generating unit is further configured to generate an intermediate data set corresponding to the indicator set obtained by the first obtaining unit;
a second obtaining unit, configured to obtain, from the intermediate data set generated by the generating unit, a target data set corresponding to the query condition information according to the query condition information carried in the query request of the user end; and
a sending unit, configured to send the target data set obtained by the second obtaining unit to the user end.

10. The data query apparatus according to claim 9, wherein a sequence of index key values generated through shuffling and encoding is the same as that of Gray codes corresponding to the index attribute values input during encoding.

11. The data query apparatus according to claim 9, wherein the intermediate data set comprises data that is corresponding to indicators in the indicator set and satisfies the query condition information, and data that is corresponding to indicators in the indicator set but does not satisfy the query condition information.

12. The data query apparatus according to claim 9, wherein:
the second obtaining unit is specifically configured to delete data not satisfying the query condition information from the intermediate data set according to the query condition information carried in the query request of the user end, and then obtain the target data set, wherein the target data set is formed by data conforming to the query condition information.

13. The data query apparatus according to claim 9, further comprising:
a third obtaining unit, configured to, when an overlapping range between index attributes carried in the query condition information and stored index attributes is less than a preset overlapping range, obtain the target data set according to the query condition information.

14. The data query apparatus according to claim 9, further comprising:
a storage unit, configured to receive data that the user end needs to write to the storage unit, store the data required to be written, and store an index key value and an indicator that are corresponding to the data required to be written.

15. An apparatus for establishing a data index, comprising:
a processing unit, configured to, after Gray encoding is performed on an index attribute, shuffle and encode a Gray code corresponding to the index attribute according to a preset rule; and
an index key value generating unit, configured to generate at least one index key value from the Gray code shuffled and encoded by the processing unit and store the index key value.

16. The apparatus for establishing a data index according to claim 15, wherein each index key value of the at least one index key value is corresponding to at least one piece data and the data is stored in a memory.

17. A storage system, comprising an apparatus for establishing a data index and a data query apparatus, wherein
the apparatus for establishing a data index is configured to, after Gray encoding is performed on an index attribute, shuffle and encode a Gray code corresponding to the index attribute according to a preset rule, generate at least one index key value from the shuffled and encoded Gray code, and store the index key value; and
the data query apparatus is configured to receive a query request from a user end, and according to query condition information carried in the query request, generate an index key value set corresponding to the query condition information, wherein the index key value is from the apparatus for establishing a data index; obtain an indicator set that is used for indicating data and is corresponding to the index key value set according to the index key value set; generate an intermediate data set corresponding to the indicator set; obtain, from the intermediate data set, a target data set corresponding to the query condition information according to the query condition information carried in the query request of the user end; and send the target data set to the user end.
